# EUROPÄISCHE PATENTSCHRIFT

(11) **EP 2 465 624 B1**
(45) Veröffentlichungstag und Bekanntmachung des Hinweises auf die Patenterteilung: **31.05.2017**
(21) Anmeldenummer: 11006401.1
(22) Anmeldetag: 04.08.2011
(51) Int. Cl.: B22D 17/22, B22C 9/06, B22D 19/00, H02K 15/00

(54) **Verfahren zur Herstellung von Produkten, die Kupfer oder Kupferlegierungen aufweisen, für elektrische Anwendungen und Produkt**
Method for producing products comprising copper or copper alloys for electric applications and product
Procédé de fabrication de produits comprenant du cuivre ou des alliages de cuivre pour applications électriques et produit

(30) Priorität: 20.12.2010 DE 102010056146
(43) Veröffentlichungstag der Anmeldung: 20.06.2012
(73) Patentinhaber: Kienle + Spiess GmbH, 74343 Sachsenheim (DE)
(72) Erfinder: Bárdos, András, 74392 Freudental (DE); Bauer, Steffen, 74374 Zaberfeld (DE)
(74) Vertreter: Jackisch-Kohl, Anna-Katharina

(56) Entgegenhaltungen:
- WO-A1-98/24573
- DE-A1- 4 329 679
- GB-A- 1 594 926
- US-A- 2 304 067
- US-A- 5 332 026

## Beschreibung

Die Erfindung betrifft ein Verfahren zur Herstellung von Produkten, die Kupfer oder Kupferlegierungen aufweisen, für elektrische Anwendungen nach dem Oberbegriff des Anspruches 1 sowie ein mit einem solchen Verfahren hergestelltes Produkt nach dem Oberbegriff des Anspruches 10.

Es ist bekannt, dass für elektrische Anwendungen Produkte eingesetzt werden, die Teile aus Kupfer oder Kupferlegierungen aufweisen. Solche Produkte sind beispielsweise elektrische Leiter, elektrische Hochspannungsschalter oder Rotoren und Statoren in Elektromotoren.

Ein bekanntes Verfahren (GB 1 594 926 A) zur Herstellung solcher Produkte für elektrische Anwendungen ist das Gießverfahren, bei dem geschmolzenes Gussmaterial in eine Gießform eingebracht wird. Das erstarrte Gießmaterial nimmt die Innenform der Gießform an.

Damit gute elektrische Eigenschaften erreicht werden, dürfen die gegossenen Teile nur sehr wenige Poren enthalten. Aus diesem Grunde wird bei anderen bekannten Verfahren die Temperatur weit über den Schmelzpunkt des eingesetzten Gussmaterials hinaus erhöht. Dies bedingt jedoch erhebliche Energiekosten, was nicht nur die Herstellung der Produkte verteuert, sondern auch im Hinblick auf die Umweltbelastung nachteilig ist. Die Poren wirken sich zudem nachteilig auf die mechanischen Eigenschaften aus.

Es ist bekannt, dass die eingesetzte Gießform bei diesen Verfahren infolge der sehr hohen Temperaturüberhöhung nur eine begrenzte Lebensdauer hat, weil an der Oberfläche Risse auftreten. Die Gießform muss das geschmolzene Material möglichst rasch kühlen und die bestehende Hitze durch die Gießform abführen. Aus diesem Grunde wird die Gießform aus einem wärmeleitenden Material mit geeigneten mechanischen Eigenschaften hergestellt. Damit der gewünschte Wärmeübergang von der metallischen Schmelze auf die Form ausreichend rasch erfolgt, muss die mit der Schmelze in Berührung kommende Innenfläche der Gießform sehr sauber und chemisch inaktiv in Bezug auf das geschmolzene Material sein. Die Schmelze muss in guten Kontakt mit der Oberfläche der Gießform kommen. Der Grad dieses Kontaktes hängt von den Benetzungsbedingungen zwischen der Gießform und dem Gussmaterial sowie der Viskosität ab. Diese wiederum sind stark temperaturabhängig, wobei die Viskosität umso geringer ist, je höher die Temperatur ist. Bei einer hohen Gießtemperatur lässt sich die Form gut füllen, wobei das Gussmaterial eine hohe Qualität aufweist. Je höher allerdings die Temperaturen sind, desto stärker wird die Gießform belastet.

Der Erfindung liegt die Aufgabe zugrunde, das gattungsgemäße Verfahren und das gattungsgemäße Produkt so auszubilden, dass einerseits das gegossene Material nur eine sehr geringe Porosität aufweist und andererseits die Gießform eine lange Einsatzdauer hat.

Diese Aufgabe wird beim gattungsgemäßen Verfahren erfindungsgemäß mit den kennzeichnenden Merkmalen des Anspruches 1 und beim gattungsgemäßen Produkt erfindungsgemäß mit den kennzeichnenden Merkmalen des Anspruches 10 gelöst.

Beim erfindungsgemäßen Verfahren wird die Temperaturüberhöhung der Schmelze des Gussmateriales niedrig gehalten, so dass nur wenig Energie erforderlich ist, das Gussmaterial zum Schmelzen zu bringen. Aufgrund der Temperaturüberhöhung der Schmelze wird erreicht, dass die Schmelze, sobald sie in die Gießform kommt, noch ausreichend Zeit hat, die Hohlräume in der Gießform vollständig zu füllen. Die Temperaturüberhöhung des Gussmateriales beträgt nur 15% bis 20%. Aufgrund des Abkühlungsgrades von nicht weniger als 10² K/s wird in Verbindung mit der geringen Temperaturüberhöhung erreicht, dass im erstarrten Gussmaterial nur noch eine sehr geringe Zahl von Poren auftritt. Die Gießform besteht aus einem Material mit einer durchschnittlichen Wärmeleitfähigkeit von nicht weniger als 100 W/(m·K). Das Material der Gießform kann sogar eine bessere Wärmeleitfähigkeit haben als das Gussmaterial selbst. Dadurch kann der hohe Abkühlungsgrad erreicht werden, ohne dass zusätzliche Kühlmaßnahmen erforderlich sind. Das gut wärmeleitfähige Material der Gießform stellt sicher, dass Hitzerisse in der Gießform auch nach langer Einsatzdauer nicht auftreten. Das mit dem Gussmaterial versehene Produkt zeichnet sich durch hervorragende mechanische und elektrische Eigenschaften aus. Da die Temperaturüberhöhung gering ist, hat die zum Gießen herangezogene Gießform eine sehr lange Lebensdauer. Aufgrund des hohen Abkühlungsgrades ist die Gefahr gering, dass das Gussmaterial im geschmolzenen Zustand oxidiert. Darum ist die Zugabe eines Oxidationsmittels nicht unbedingt erforderlich. Der hohe Abkühlungsgrad bedeutet auch weniger Poren und eine feine Kornstruktur.

Es ist in einer bevorzugten Ausführungsform selbstverständlich möglich, dem Gussmaterial wenigstens ein Desoxidationsmittel zuzugeben. Es kann beispielsweise Bor, Phosphor, Alkalimetall oder dergleichen sein. Die Zugabe eines Desoxidationsmittels empfiehlt sich dann, wenn größere Schmelzmengen eingesetzt werden, die entsprechend länger Oxidationsbedingungen ausgesetzt sind.

Vorteilhaft wird das erfindungsgemäße Verfahren so ausgeführt, dass die Porosität ein maximales Volumenverhältnis von 1,5% aufweist, wobei das Volumenverhältnis gemessen wird als V_{Poren}/V_{Gussmaterial}.

Selbstverständlich kann die Gießform zusätzlich gekühlt werden, beispielsweise mit Kühlmedium, das durch entsprechende Bohrungen in der Gießform geleitet wird.

Als Material für die Gießform kann beispielsweise Kupfer oder eine Kupferlegierung, wie etwa CuNi2SiCr, eingesetzt werden.

Vorteilhaft wird das Gussmaterial in einer Schutzgasatmosphäre geschmolzen. Dann werden unerwünschte Oxidationen des geschmolzenen Gussmaterials zuverlässig vermieden.

Es ist selbstverständlich möglich, das Gussmaterial auch ohne Schutzgasatmosphäre zu schmelzen.

Es ist vorteilhaft, wenn die mit dem Gussmaterial in Berührung kommende Innenseite der Gießform mit einer Beschichtung versehen ist, die eine metallurgische Reaktion zwischen dem Gussmaterial und dem Material der Gießform verhindert. Die Beschichtung besteht aus einem harten, stark adhäsiven inaktiven Material. Beispielsweise kann für die Beschichtung CrN oder Graphit eingesetzt werden.

Das geschmolzene Gussmaterial kann auf verschiedene Weise in die Gießform eingebracht werden. So kann das geschmolzene Gussmaterial durch Druckgießen in die Gießform eingebracht werden. Dabei kann die Zuführung des geschmolzenen Gussmateriales horizontal oder auch vertikal erfolgen.

Es kann auch das Schleudergieß-Verfahren eingesetzt werden.

Wenn größere Produkte eingesetzt werden sollen, dann empfiehlt sich das Kokillengießen.

Das Gussmaterial kann auf unterschiedliche Weise geschmolzen werden, beispielsweise in einem Induktionsofen, in einem elektrischen Widerstandsofen oder in einem gasbeheizten Ofen.

Das Produkt gemäß Anspruch 10 ist so ausgebildet, dass die Porosität des erstarrten Gussmaterials ein Maximum von 1,5 V_{Poren}/ V_{Gussmaterial} in Prozent beträgt.

Weitere Merkmale der Erfindung ergeben sich aus den weiteren Ansprüchen, der Beschreibung und den Zeichnungen.

Die Erfindung wird anhand eines in den Zeichnungen dargestellten Ausführungsbeispieles näher erläutert. Es zeigen
- Fig. 1: ein Rotorblech mit offenen Nuten,
- Fig. 2: ein Rotorblech mit geschlossenen Nuten,
- Fig. 3: in Seitenansicht ein aus Rotorblechen zusammengesetztes Rotorpaket,
- Fig. 4: eine Draufsicht auf das Rotorpaket gemäß Fig. 3,
- Fig. 5: in schematischer Darstellung und im Schnitt eine Gießform zur Durchführung des erfindungsgemäßen Verfahrens,
- Fig. 6: in einem Diagramm die Abhängigkeit der Porosität im Gussmaterial vom Abkühlungsgrad.

Im Folgenden wird das Verfahren beispielhaft an einem Rotorpaket erläutert. Dies ist aber nicht als Beschränkung auf diesen Anwendungsfall zu verstehen. Das Verfahren kann dort eingesetzt werden, wo es darauf ankommt, dass das Gussmaterial nur sehr wenige Poren aufweist.

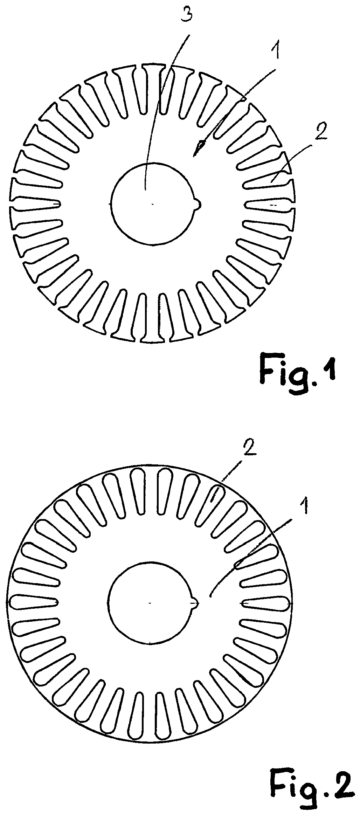

Bei Elektromotoren werden Statoren und Rotoren eingesetzt, die jeweils ein Stator- bzw. ein Rotorblechpaket aufweisen. Diese Pakete haben aufeinandergesetzte Blechlamellen. Anhand der Fig. 1 bis 4 wird beispielhaft ein Rotorblechpaket beschrieben. Es wird aus Rotorblechen 1 (Fig. 1) gebildet, die in einem Stanzverfahren aus einem (nicht dargestellten) Metallband gestanzt wird. Das Rotorblech gemäß Fig. 1 hat über seinen Umfang gleichmäßig verteilt angeordnete Nuten 2, die radial nach außen offen sind. Das Rotorblech 1 ist mit einer zentralen Öffnung 3 versehen.

Das Rotorblech 1 gemäß Fig. 2 unterscheidet sich vom Ausführungsbeispiel nach Fig. 1 lediglich dadurch, dass die umfangsseitigen Nuten 2 radial nach innen und nach außen geschlossen sind.

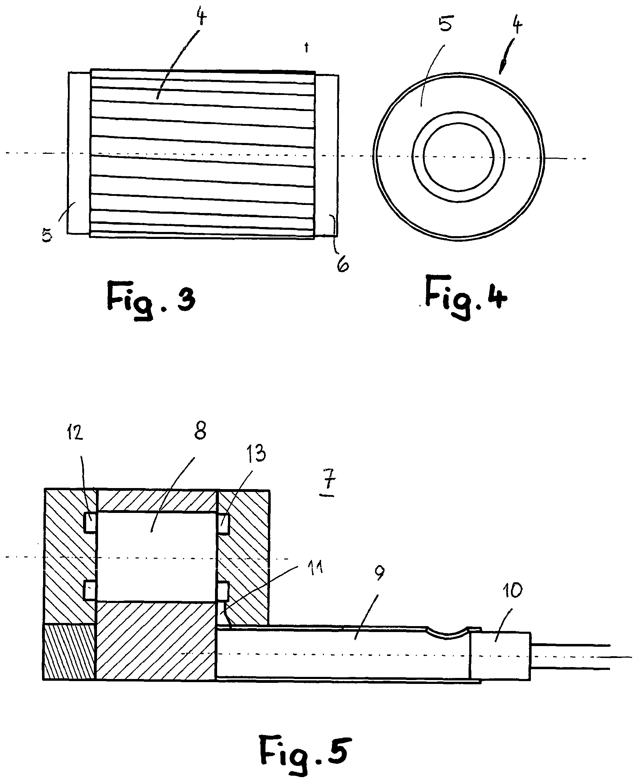

Die Rotorbleche 1 werden in bekannter Weise zu einem Blechpaket 4 (Fig. 3) zusammengesetzt. Aufeinandersitzende Bleche 1 können formschlüssig miteinander verbunden werden. Hierfür ist jedes Blech in seinem Ringbereich zwischen den Nuten 2 und der zentralen Öffnung 3 mit über den Umfang verteilt angeordneten, durch plastische Verformung gebildeten Erhöhungen versehen, die in die entsprechenden Vertiefungen des jeweils benachbarten Rotorbleches 1 eingreifen. Aufeinanderliegende Rotorbleche 1 können aber auch miteinander verklebt werden. Die Öffnungen 3 der Rotorbleche 1 bilden eine Schaftbohrung, in die eine Welle eingesetzt wird, auf der das Rotorpaket 4 sitzt.

Die Nuten 2 am Umfang der Rotorbleche bilden über die axiale Länge des Blechpaketes 4 durchgehende Nuten, die achsparallel, aber auch, wie Fig. 3 zeigt, schräg verlaufen können. Für diesen Fall sind aufeinanderliegende Rotorbleche 1 jeweils um ein entsprechendes Maß relativ zueinander verdreht.

An den beiden Stirnseiten des Rotorpaketes 4 befinden sich Kurzschlussringe 5, 6. Sie werden in einer Gießform erzeugt, die in Fig. 5 beispielhaft dargestellt ist.

In dieser Gießform wird beispielsweise Kupfer in die Nuten 2 des Rotorpaketes 4 eingebracht. Die Gießform 7 ist so ausgebildet, dass gleichzeitig mit dem Verfüllen der Nuten 2 die Kurzschlussringe 5, 6 gebildet werden.

Die Gießform 7 hat einen Hohlraum 8, der das Blechpaket 4 aufnimmt. Über eine Füllkammer 9 wird mit Hilfe eines Gießkolbens 10 das zu gießende Metall in den Hohlraum 8 in bekannter Weise eingebracht. Die Füllkammer 9 ist über wenigstens einen Kanal 11 mit dem Hohlraum 8 verbunden. Die Gießform 7 weist zwei Ringräume 12, 13 auf, die zur Ausbildung der Kurzschlussringe 5, 6 dienen. Das flüssige Metall durchdringt die Nuten 2 des Blechpaketes 4 und füllt diese vollständig aus.

Als Gussmaterial werden Kupfer oder Kupferlegierungen verwendet, die hohe Schmelztemperaturen oberhalb von etwa 1.035°C aufweisen. Die Abkühlgeschwindigkeit des Gussmaterials wird so gewählt, dass das Gussmaterial keine oder nur eine sehr geringe Porosität aufweist. Die Kühlrate wird so eingestellt, dass sie nicht geringer als etwa 10³K/s ist. Das Gussmaterial wird bei dieser Vorgehensweise nicht mehr als etwa 15% bis etwa 20% seines Schmelzpunktes überhitzt, wodurch im Zusammenspiel mit dem genannten Abkühlungsgrad Poren im Endprodukt vermieden werden.

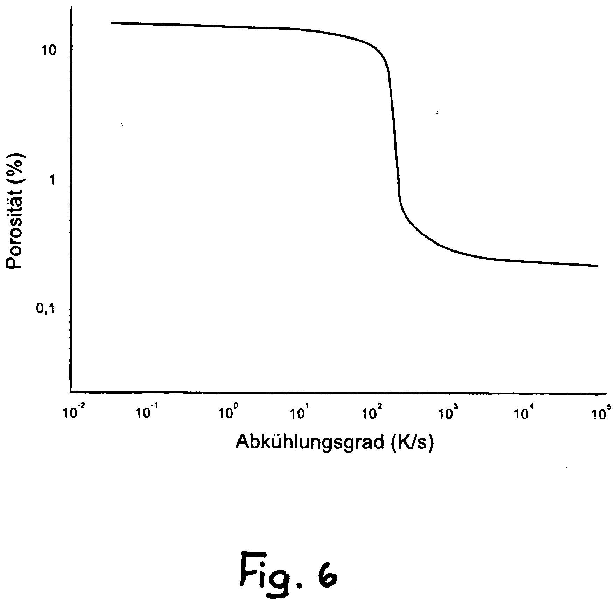

In Fig. 6 ist die Abhängigkeit der im Endprodukt auftretenden Porosität in Abhängigkeit vom Abkühlungsgrad beim beschriebenen Verfahren dargestellt. Es ist erkennbar, dass oberhalb einer Abkühlungsrate von mehr als etwa 10³K/s nur noch eine sehr minimale Porosität im Endprodukt auftritt, die geringer als etwa 1% ist. Durch eine solche Vorgehensweise wird sichergestellt, dass die mechanischen und/oder elektrischen Eigenschaften des Endproduktes hervorragend sind, da diese Eigenschaften beeinträchtigende Poren nicht oder nur in sehr geringem Maße vorhanden sind.

Um die hohe Abkühlgeschwindigkeit zu erreichen und darüber hinaus eine lange Einsatzdauer der Gießform 7 zu gewährleisten, besteht diese aus einem wärmeleitenden Material mit geeigneten mechanischen Eigenschaften. Die Gießform 7 besteht aus einem Material, das eine gute oder sogar bessere Wärmeleitfähigkeit als das Gussmaterial selbst aufweist. Das Material für die Gießform 7 hat eine durchschnittlich Wärmeleitfähigkeit, die nicht kleiner als etwa 100 W/(m·K) beträgt. Beispielsweise kann für die Gießform 7 eine Kupferlegierung, wie CuNi2SiCr, eingesetzt werden.

Die mit dem Gussmaterial in Berührung kommende Innenseite ist vorteilhaft mit einem Material beschichtet ist, das chemisch inaktiv in Bezug auf das metallische Gussmaterial ist. Dadurch lassen sich die Benetzungsbedingungen verbessern. Außerdem wird dadurch eine metallurgische Verbindung zwischen der Gießform 7 und dem metallischen Gussmaterial verhindert.

Als Beschichtung für die Innenseite der Gießform 7 kommt beispielsweise CrN oder Graphit in Betracht, das eine metallurgische Verbindung zwischen dem Material der Gießform 7 und dem Gussmaterial zuverlässig verhindert. Dabei lässt sich Graphit einfach an der Gießform 7 anbringen.

Vorteilhaft ist es, wenn als Gussmaterial reines Kupfer oder Kupferlegierungen eingesetzt werden, die die hohen Schmelzpunkte von mehr als etwa 1.035°C haben und für elektrische Anwendungen verwendet werden.

Das Gießmaterial wird mittels Induktion geschmolzen. Dieser Schmelzprozess kann ohne oder unter einer Inertgasatmosphäre durchgeführt werden. Es ist aber auch möglich, das Material in einem elektrischen Widerstandsofen oder in einem gasbeheizten Ofen zu schmelzen.

Da die Gießform 7 aus einem Material mit guter Wärmeleitfähigkeit und guten mechanischen Eigenschaften, zum Beispiel eine Kupferlegierung, hergestellt wird, werden Hitzerisse vermieden. Die Gießform 7 und das Gussmaterial haben etwa gleiche Wärmeleitfähigkeit. Vorteilhaft ist es, wenn das Material der Gießform 7 sogar eine höhere Wärmeleitfähigkeit als das Gussmaterial selbst hat. Es hat sich gezeigt, dass dann die Gießform 7 eine lange Einsatzdauer hat und schädliche Risse nicht auftreten.

Durch die beschriebene Ausbildung der Gießform 7 und der Verfahrensweise wird erreicht, dass das mit dem Gussmaterial versehene Endprodukt keine oder eine nur sehr geringe Porosität aufweist. Dabei muss das Gussmaterial nicht wesentlich über den Schmelzpunkt des Gussmaterials hinaus erhitzt werden. Die Überhitzung beträgt nicht mehr als etwa 15% bis etwa 20% des Schmelzpunktes des jeweiligen Gussmaterials. Aufgrund der beschriebenen Wärmeleitfähigkeit der Gießform 7 ergibt sich in der beschriebenen Weise eine lange Lebensdauer der Gießform, weil Risse verhindert werden. Außerdem weist das erstarrte Gussmaterial durch das beschriebene Zusammenspiel der hohen Abkühlrate und der nur geringen Überhitzung des Gussmaterials während des Gießprozesses nur sehr geringe Porosität auf. Die hohe Abkühlrate führt außerdem zu einer sehr feinen Kornstruktur im Gussmaterial, wodurch die mechanischen Eigenschaften verbessert und eine sehr hohe elektrische Leitfähigkeit erreicht werden.

Im Folgenden wird das Verfahren anhand verschiedener Ausführungsbeispiele beispielhaft beschrieben.

Bei einer ersten Ausführungsform wurden 3 kg Kupfer in einem Induktionsofen unter Schutzgasatmosphäre geschmolzen. Das Schutzgas verhindert eine Oxidation des Kupfers. Als Schutzgas kommen beispielsweise Argon oder Stickstoff in Betracht. Der Induktionsofen war an eine herkömmliche Druckgussmaschine angeschlossen, in der eine Gießform installiert war, die aus einem Material mit guter Wärmeleitfähigkeit bestand. Dieses Material hatte eine durchschnittliche Wärmeleitfähigkeit, die nicht unterhalb 100 W/(m·K) lag. Für die Kurzschlussringe 5, 6 wurden in der Gießform 7 die Hohlräume 12, 13 vorgesehen, die einen Außendurchmesser von 103 mm, einen Innendurchmesser von 57 mm und einer Höhe von 10 mm aufwiesen. Im Rotorpaket 4 waren 28 Nuten 2 vorgesehen, die mit dem Gussmaterial ausgefüllt werden sollten. Die Gesamtoberfläche des in den Nuten 2 befindlichen Gussmaterials betrug somit 28·53,6 mm².

Nach dem Einsetzen des Rotorpaketes 4 in die Gießform 7 wurde das geschmolzene Kupfer in die Nuten 2 sowie in die Ringräume 12, 13 eingebracht. Das geschmolzene Kupfer wurde nicht höher als etwa 15% bis 20% seines Schmelzpunktes erhitzt und unter Druck in die Gießform 7 eingeführt. Die Wärme wurde durch das Material der Gießform 7 abgeführt.

Das vergossene Rotorpaket 4 hatte eine durchschnittliche Porosität von weniger als 1% in den beiden Kurzschlussringen 5, 6 sowie innerhalb der Nuten 2.

Nach mehr als 100 Schüssen wurden in der Oberseite der Gießform 7 keine Risse festgestellt, während bei herkömmlichen Gießformen aus hochtemperaturfestem Stahl bereits nach 25 Schüssen Risse sichtbar waren. Nach 50 Schüssen konnte die herkömmliche Gießform nicht mehr eingesetzt werden.

Die Abkühlrate bei diesem Ausführungsbeispiel betrug 10³K/s.

Bei einem zweiten Ausführungsbeispiel wurde 10,1 kg Kupfer in einem Induktionsofen ohne Schutzgasatmosphäre geschmolzen. Im Übrigen wurde die gleiche Gießform und das gleiche Verfahren wie beim ersten Ausführungsbeispiel verwendet. Das geschmolzene Kupfer wurde nur etwa 15% bis etwa 20% seiner Schmelztemperatur überhitzt. Das flüssige Kupfer wurde nicht in die Gießform während der ersten Gießphase voreingefüllt.

Auch bei diesem Ausführungsbeispiel wurde eine sehr geringe Porosität in den Kurzschlussringen 5, 6 sowie des Kupfers in den Nuten 2 erreicht. Die Abkühlgeschwindigkeit betrug ebenfalls 10³K/s.

Bei einem dritten Ausführungsbeispiel wurde 11 kg Kupfer mittels Induktion ohne Schutzgasatmosphäre geschmolzen. Sobald das Kupfer die Gusstemperatur erreicht hatte, wurde es mit einem Deoxidanzmittel (2,5g Li) legiert. Als Deoxidantien kommen beispielsweise Bor, Phosphor oder ein Alkalimetall in Betracht. Durch dieses Deoxidanzmittel wurde eine weitere Oxidation des Kupfers verhindert. Aufgrund des Zusatzes des Oxidanzmittels konnte das geschmolzene Kupfer bei der Gusstemperatur für beispielsweise mehr als 15 Minuten gehalten werden, ohne dass das geschmolzene Kupfer oxidiert ist. Diese Vorgehensweise eignet sich für größere Schmelzmengen, die länger verwendet werden können, ohne dass die Gefahr der Oxidation besteht.

Im Übrigen wurde das Verfahren entsprechend dem ersten Ausführungsbeispiel durchgeführt.

Beim Druckgussverfahren kann die Gießform vertikal oder horizontal angeordnet sein.

Das geschmolzene Material kann auch durch Schleudergießen eingebracht werden.

Handelt es sich um größere Produkte, dann kann auch das Kokillengießverfahren eingesetzt werden.

## Patentansprüche

1. Verfahren zur Herstellung von Produkten, die Kupfer oder Kupferlegierungen aufweisen, für elektrische Anwendungen, bei dem das Kupfer oder die Kupferlegierung geschmolzen und in einer Gießform (7) am Ausgangsprodukt angebracht wird, wobei Gussmaterial mit einem Schmelzpunkt höher als 1035°C verwendet wird, das geschmolzene Material um höchstens 15% bis 20% seines Schmelzpunktes überhitzt wird und für das geschmolzene Material eine Gießform (7) verwendet wird, die aus einem Material besteht, das eine durchschnittliche Wärmeleitfähigkeit von mehr als 100 W/(m·K) aufweist, **dadurch gekennzeichnet, dass** die Abkühlgeschwindigkeit der Schmelze größer gleich 10³ K/s ist.

2. Verfahren nach Anspruch 1,
**dadurch gekennzeichnet, dass** die Deoxidation der Schmelze mit einem Desoxidationsmittel durchgeführt wird.

3. Verfahren nach Anspruch 1 oder 2,
**dadurch gekennzeichnet, dass** das Gussmaterial unter Schutzgasatmosphäre geschmolzen wird.

4. Verfahren nach einem der Ansprüche 1 bis 3,
**dadurch gekennzeichnet, dass** das geschmolzene Gussmaterial durch ein Druckgussverfahren eingebracht wird.

5. Verfahren nach einem der Ansprüche 1 bis 3,
**dadurch gekennzeichnet, dass** das geschmolzene Gussmaterial durch Schleudergießen eingebracht wird.

6. Verfahren nach einem der Ansprüche 1 bis 3,
**dadurch gekennzeichnet, dass** das geschmolzene Gussmaterial durch Kokillengießen eingebracht wird.

7. Verfahren nach einem der Ansprüche 1 bis 6,
**dadurch gekennzeichnet, dass** das Gussmaterial in einem Induktionsofen geschmolzen wird.

8. Verfahren nach einem der Ansprüche 1 bis 6,
**dadurch gekennzeichnet, dass** das Gussmaterial in einem elektrischen Widerstandsofen geschmolzen wird.

9. Verfahren nach einem der Ansprüche 1 bis 6,
**dadurch gekennzeichnet, dass** das Gussmaterial in einem gaserhitzten Ofen geschmolzen wird.

10. Produkt, hergestellt mit dem Verfahren nach einem der Ansprüche 1 bis 9, das gegossenes Kupfer oder Kupferlegierungen aufweist, **dadurch gekennzeichnet, dass** die Porosität des erstarrten Gussmaterials ein Maximum von 1,5 V_{Poren}/V_{Gussmaterial} in Prozent beträgt.

## Claims

1. Method for producing products, comprising copper or copper alloys for electric applications, in which the copper or the copper alloy is smelted and applied to the starting product in a casting mold (7), wherein casting material with a melting point higher than 1035 °C is used, the molten material is superheated by at most 15 % to 20 % of its melting point and a casting mold (7) made of a material having an average thermal conductivity of more than 100 W/(m·K) is used for the molten material,
**characterized in that** the cooling rate of the melt is greater or equal 10³ K/s.

2. Method according to claim 1,
**characterized in that** the deoxidation of the melt is carried out with a deoxidizing agent.

3. Method according to claim 1 or 2,
**characterized in that** the cast material is melted under a protective gas atmosphere.

4. Method according to any one of claims 1 to 3,
**characterized in that** the molten cast material is introduced by means of a die-casting process.

5. Method according to any one of claims 1 to 3,
**characterized in that** the molten cast material is introduced by means of centrifugal casting.

6. Method according to any one of claims 1 to 3,
**characterized in that** the molten cast material is introduced by means of chill casting.

7. Method according to any one of claims 1 to 6,
**characterized in that** the molten cast material is smelted in an induction furnace.

8. Method according to any one of claims 1 to 6,
**characterized in that** the molten cast material is smelted in an electric resistance oven.

9. Method according to any one of claims 1 to 6,
**characterized in that** the molten cast material is smelted in a gas-heated furnace.

10. Product produced by the method according to any one of claims 1 to 9, comprising cast copper or copper alloys, **characterized in that** the porosity of the solidified cast material amounts to a maximum of 1.5 Vₚₒᵣₑₛ/V_{castmaterial} in percent.

## Revendications

1. Procédé destiné à fabriquer des produits comportant du cuivre ou des alliages de cuivre pour des applications électriques, lors duquel on fait fondre le cuivre ou l'alliage de cuivre et dans un moule de coulage (7), on l'applique sur le produit de départ, sachant qu'on utilise un matière de coulée présentant un point de fusion supérieur à 1035 °C, on fait surchauffer la matière fondue au plus à de 15 % à 20 % au-delà de son point de fusion et pour la matière fondue, on utilise un moule de coulage (7) qui est composé d'une matière qui fait preuve d'une conductivité moyenne de plus de 100 W/(m·K),
**caractérisé en ce que** la vitesse de refroidissement de la masse fondue est supérieure ou égale à 10³K/s.

2. Procédé selon la revendication 1,
**caractérisé en ce qu'**on procède à la désoxydation de la masse fondue avec un produit désoxydant.

3. Procédé selon la revendication 1 ou 2,
**caractérisé en ce qu'**on fait fondre la matière de coulée sous atmosphère de gaz protecteur.

4. Procédé selon l'une quelconque des revendications 1 à 3,
**caractérisé en ce qu'**on introduit la matière de coulée fondue par un procédé de coulée sous pression.

5. Procédé selon l'une quelconque des revendications 1 à 3,
**caractérisé en ce qu'**on introduit la matière de coulée fondue par coulée centrifuge.

6. Procédé selon l'une quelconque des revendications 1 à 3,
**caractérisé en ce qu'**on introduit la matière de coulée fondue par coulée en coquille.

7. Procédé selon l'une quelconque des revendications 1 à 6,
**caractérisé en ce qu'**on fait fondre la matière de coulée dans un four à induction.

8. Procédé selon l'une quelconque des revendications 1 à 6,
**caractérisé en ce qu'**on fait fondre la matière de coulée dans un four à résistance électrique.

9. Procédé selon l'une quelconque des revendications 1 à 6,
**caractérisé en ce qu'**on fait fondre la matière de coulée dans un four chauffé au gaz.

10. Produit, fabriqué à l'aide du procédé selon l'une quelconque des revendications 1 à 9, qui comporte du cuivre coulé ou des alliages de cuivre,
**caractérisé en ce que** la porosité de la matière de coulée solidifiée s'élève à un maximum de 1,5 Vₚₒᵣₑₛ/V_{matière} de coulée, en pourcentage.
